# EUROPÄISCHE PATENTSCHRIFT

(11) **EP 1 044 094 B1**
(45) Veröffentlichungstag und Bekanntmachung des Hinweises auf die Patenterteilung: **28.08.2002**
(21) Anmeldenummer: 98966853.8
(22) Anmeldetag: 28.12.1998
(51) Int. Cl.: B29C 47/08, B29C 47/68

(54) **VORRICHTUNG ZUM FILTERN VON KUNSTSTOFFSCHMELZEN MIT WECHSEL DER FILTERNDEN SIEBPACKUNGEN**
POLYMER MELT FILTERING DEVICE WITH CHANGING FILTER PACKETS
DISPOSITIF POUR FILTRER DES MATIERES PLASTIQUES EN FUSION AVEC CHANGEMENT DES PAQUETS DE FILTRES

(30) Priorität: 31.12.1997 DE 19758290
(43) Veröffentlichungstag der Anmeldung: 18.10.2000
(73) Patentinhaber: GNEUSS KUNSTSTOFFTECHNIK GmbH, D-32549 Bad Oeynhausen (DE)
(72) Erfinder: GNEUSS, Daniel, D-32549 Bad Oeynhausen (DE)
(74) Vertreter: Grosse, Wolf-Dietrich, Dipl.-Ing.
(86) Internationale Anmeldenummer: EP9808474
(87) Internationale Veröffentlichungsnummer: WO99037463

(56) Entgegenhaltungen:
- DE-A- 1 729 396
- FR-A- 1 210 419
- US-A- 3 632 279
- US-A- 4 127 370

## Beschreibung

Vorrichtung zum Filtern von Kunststoffschmelzen mit einem mit einer Zuleitung sowie einer Ableitung der Kunststoffschmelze ausgestatteten Gehäuse, in dem zwischen den Mündungen der Zu- und der Ableitung ein Schieber abgedichtet quer zu der Zu- sowie Ableitung verfahrbar ist, der in Kavitäten abgestützte, wahlweise den Leitungen zuordenbare Filterschichten aufweist. Derartige Vorrichtungen zum Filtern von Kunststoffschmelzen, bei denen durch Verschieben von quader- oder zylinderförmigen Schiebern die in den Filterkavitäten enthaltenen Filterschichten wahlweise in den Schmelzestrom fahrbar sind, sind in unterschiedlichen Ausführungen bekannt. Das Gehäuse, in dem der Schieber verfahrbar ist, kann einteilig erstellt sein oder auch aus mehreren mechanischen Baugruppen bestehen, die miteinander, bspw. durch Schrauben, fest verbunden sind. Bei allen diesen Anordnungen jedoch erweist sich die Abdichtung des unter hohem Druck stehenden Schmelzestromes nach außen als problematisch, zumal die Schieber möglichst leicht bewegbar bleiben sollen und das Verschieben der aufeinandergleitenden Flächen trotz Andruckes nur geringen Widerstand gegen das Verschieben bieten soll.

Um diese problematischen Abdichtungen durchzuführen, hat man bisher sehr lange Abdichtflächen benutzt, so daß die Schmelze sich in dem gebildeten schmalen Spalt totläuft, d.h., sich ihr Druck entlang dieses Spaltes mit geringem Gradienten abbaut. Andererseits hat man die gegeneinander abzudichtenden Teile paßgenau in sehr engen Toleranzen erstellt und hohe Anpreßkräfte ausgeübt, die zu ihrer Stabilität aufwendige Federelemente benötigen, und die für die Dichtringe sowohl hohe Härte als auch geringen Reibungswiderstand sowie geringe Erosion fordern, um die notwendigen Verschiebungen mit erträglichem Aufwand durchführen zu können. Die DE-A 17 29 396 schlägt eine aufwendige Anordnung vor, die beim Einsetzen der Verschiebebewegung die Dichtung entlastet und nach der Vollendung einer Stellbewegung mittels eines Keilgetriebes eine hohe Anpreßkraft bewirkt. Schließlich ist es noch möglich, bei extrem hoher Paßgenauigkeit und damit entsprechend hohem Herstellungsaufwand geringere Anpreßkräfte zu verwenden. In jedem dieser Fälle jedoch ergibt sich ein ungewünschter hoher mechanischer Aufwand in Verbindung mit einer Einschränkung der Beweglichkeit.

Die FR 1 210 419 zeigt zylindrische Bausteine mit nach Außen auskragenden Wulsten, deren Flanken schräg nach Außen abfallen, und die von zwei gegeneinander anstellbaren Spannhalbringen umgriffen sind. Als Dichtung ist ein eine Siebplatte umgrenzender Rohrstutzen vorgesehen. Im Verbindungsbereich sind weder Maßnahmen getroffen, Teile zu bewegen, zu entnehmen oder außzutauschen, so daß für Filter-Wechselanordnungen keine Anregungen entnehmbar sind.

Die Erfindung geht daher von der Aufgabe aus, eine gattungsgemäße Vorrichtung zu schaffen, die einfach aufgebaut ist, durch relativ weite Toleranzen eine billige Herstellung erlaubt, und die es gestattet, den die zu wechselnden Filterschichten aufweisenden Schieber mit relativ geringen Kräften und ohne wesentlichen Verschleiß der Führungs- und Dichtflächen wunschgemäß zu verfahren.

Gelöst wird diese Aufgabe durch die im Kennzeichen des Patentanspruches 1 aufgeführten Merkmale. Sie erlauben es, ohne Abstriche an der Wirksamkeit der Dichtungen mit relativ geringen Anpreßkräften zu arbeiten, so daß die zur Verschiebung benötigten Kräfte ebenso wie der durch das Verschieben bedingte Verschleiß der Führungs- und Dichtelemente gering bleiben.

Zweckmäßige, vorteilhafte und erfinderische Weiterbildungen des Gegenstandes der Erfindung sind den folgenden Unteransprüchen entnehmbar.

Im einzelnen sind die Merkmale der Erfindung anhand der Beschreibung eines Ausführungsbeispieles in Verbindung mit dieses darstellenden Zeichnungen erläutert. Es zeigen hierbei:
- Figur 1: eine Aufsicht auf eine Filtervorrichtung, und
- Figur 2: einen bereichsweisen Längsschnitt durch die Filtervorrichtung nach Fig. 1.

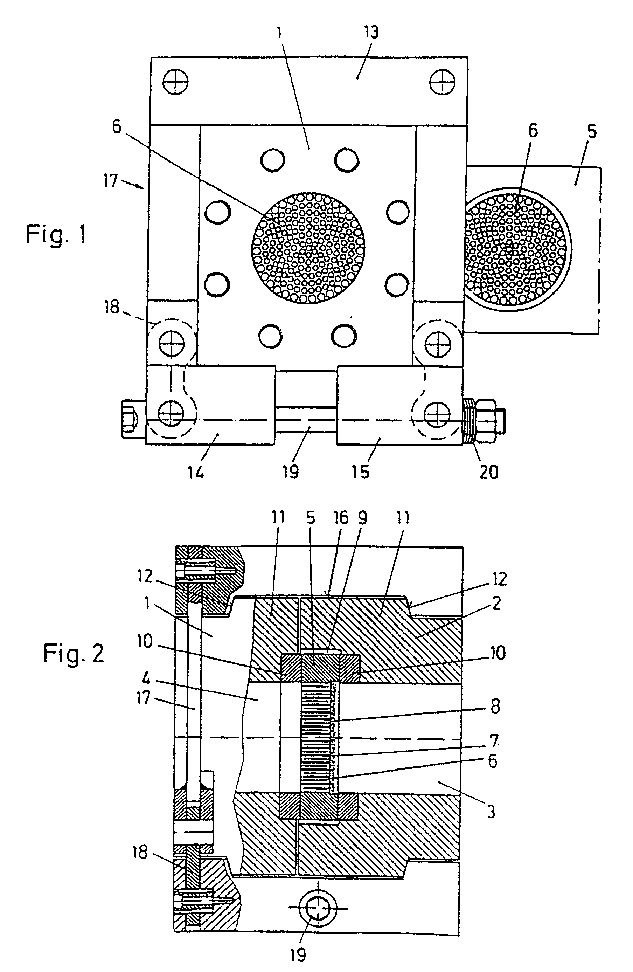

In den Figuren wird ein aus zwei Gehäuseteilen 1 und 2 zusammengestelltes Gehäuse einer Filtervorrichtung gezeigt, an deren Gehäuseteile sich eine Zuleitung 3 bzw. eine Ableitung 4 für die zu filtrierende bzw. gefilterte Kunststoffschmelze anschließen. Gehäuseteil 2 weist eine Ausnehmung 9 auf, in der quer zur Richtung der Zu- und Ableitung 3, 4 verschiebbar ein Schieber 5 geführt ist. Dieser Schieber weist Filterplatten 6 auf, die zum Abstützen von Filterschichten 7, die in Kavitäten 8 über dieser Filterplatte 6 anstehen, stark ausgeführt, jedoch siebartig mit Bohrungen ausgestattet sind. Wie in Fig. 1 dargestellt, kann ein Schieber 5 zwei Kavitäten 8 mit Filterplatte 6 für Filterschichten 7 aufweisen, er kann aber auch länger ausgebildet sein und über eine entsprechend größere Anzahl von in den Schmelzestrom einbringbaren Filterschichten versehen sein.

Zur Abdichtung sind die Frontflächen der Gehäuseteile 1 und 2 einander zugewandt und jeweils mit in Ringnuten untergebrachten Dichtringen 10 ausgestattet. Die Gehäuseteile 1, 2 selbst sind mit vorspringenden Wulsten 11 ausgestattet, deren freie Enden mit schräggestellten Preßflächen 12 versehen sind.

Zusammengehalten werden die beiden Gehäuseteile 1 und 2 durch spezielle Spannplatten 13 bis 15, die jeweils mit die Wulste 11 umfassenden Aussparungen 16 versehen sind. In den Figuren oben ist eine einstückige Spannplatte 13 gezeigt, an deren Enden Schenkel 17 schwenkbar angelenkt sind, die ihrerseits in Lenker 18 enden, die an die Spannplatten 14 bzw. 15 angelenkt sind. Die Spannplatten 14 und 15 sind mit Längsbohrungen ausgestattet, die von einer Spannschraube 19 durchgriffen sind. Um eine gewisse Elastizität zu erreichen, ist die Spannschraube 19 zusätzlich mit Tellerfedern 20 ausgestattet.

Im Betriebe werden, wie in der Zeichnung dargestellt, nach Einfügen der Dichtringe 10 in ihre Ringnute die Gehäuseteile 1 und 2 mit ihren Frontflächen aufeinander ausgerichtet, und der Schieber 5, bestückt mit Filterplatten 6, wird in die Ausnehmung 9 eingesetzt. Sodann werden an den Schenkeln 17 und den Lenkern 18 die Spannplatten 14 und 15 aufeinander zubewegt, wobei die Wulste 11 in deren Aussparungen 16 eingelegt werden. Nunmehr wird die Spannschraube 19 durch die Bohrungen der Spannplatten 14 und 15 gesteckt, die Tellerfedern 20 werden auf das freie Schraubenende aufgefädelt, und die Mutter 21 wird auf die Spannschraube aufgeschraubt. Die Spannschraube richtet die Spannplatten 14 und 15 gegeneinander aus, und bei weiterem Anziehen derselben werden sie einander genähert, wobei die Lenker 18 jeweils aufeinander zu geschwenkt werden. Ihre Anlenkachsen an die Spannplatten 14 und 15 werden hierbei entlang eines Kreisbogens geführt; das bedeutet, daß die beiden Spannplatten 14 und 15 sowohl aufeinander zu als auch gegen die Spannplatte 13 bewegt werden. Bei der Bewegung der Spannplatten aufeinander zu werden die schräggestellten Preßflächen ihrer Aussparungen 16 aufeinander zu bewegt und spannen mittels der Preßflächen 12 die Gehäuseteile 1 und 2 aufeinander. Gleichzeitig aber wird auch eine Bewegung in Richtung auf die Spannplatte 13 hin bewirkt, so daß die in deren Aussparung eingreifenden Wulste 11 durch ihre schräggestellten Preßflächen 12 beim Tiefereindrücken in die Ausnehmungen auch weiter aufeinander zu geschoben werden. Das bedeutet also, daß beim Anziehen der Mutter 21 der Spannschraube 19 mittels der schrägen Preßfläche 12 der Aussparungen 16 der Spannplatten 13 bis 15 die Gehäuseteile 1 und 2 aufeinander zu gepreßt werden; da die Ausnehmung 9, die Höhe des Schiebers 5 sowie die Stärke der Dichtringe 10 und die Tiefe der sie aufnehmenden Ringnute so bemessen sind, daß die Stirnflächen der Gehäuseteile 1 und 2 sich noch nicht berühren, liegt die derart erzeugte Spannkraft einzig auf den Dichtringen 10 sowie den diese stützenden Flächenbereiche des Schiebers 5 auf. Damit aber ist mit einfachen Mitteln eine auch bei höchsten Schmelzedrucken ausreichende Stützkraft induziert, und durch die fliegende Lagerung der Gehäuseteile eliminiert sich das sonst anstehende Problem der Planparallelität der die Abdichtung bewirkenden Elemente, was sonst nur durch einen sehr hohen technischen Herstellungsaufwand erreichbar ist.

Die Erfindung ist nicht auf die im Ausführungsbeispiel benutzten Mittel beschränkt. So können bspw. auch zylindrische Gehäuseteile in Verbindung mit einem Spannring benutzt werden, und überhaupt kann der Spannmechanismus geändert werden. Wesentlich ist nur, daß durch eine Bewegung innerhalb der Ebene der Stirnflächen der Gehäuseteile diese aufeinander zu gepreßt werden, so daß die Dichtflächen mit dem erforderlichen Anpreßdruck aufeinanderliegen. Ebenso muß der Schieber nicht unbedingt einen rechteckigen Querschnitt aufweisen; es sind auch bspw. zylindrisch geformte Schieber möglich, wie sie unter der Bezeichnung "Bolzen" bereits benutzt werden. In jedem Falle aber erlaubt die grundsätzliche Teilung des Gehäuses in separate Gehäuseteile und die empfohlene fliegende Lagerung eine kostengünstige Herstellung in Verbindung mit einfachem Aufbau.

### Bezugszeichenliste

- 1: Gehäuseteil
- 2: Gehäuseteil
- 3: Zuleitung
- 4: Ableitung
- 5: Schieber
- 6: Filterplatten
- 7: Filterschichten
- 8: Kavitation
- 9: Ausnehmung
- 10: Dichtringe
- 11: Wulste
- 12: Preßflächen
- 13: Spannplatten
- 14: Spannplatten
- 15: Spannplatten
- 16: Aussparungen
- 17: Schenkel
- 18: Lenker
- 19: Spannschraube
- 20: Tellerfedern
- 21: Mutter

## Patentansprüche

1. Vorrichtung zum Filtern von Kunststoffschmelzen mit einem mit einer Zuleitung sowie einer Ableitung der Kunststoffschmelze ausgestatteten Gehäuse, in dem zwischen den Mündungen der Zu- sowie der Ableitung ein Schieber abgedichtet quer zu der Zu- sowie der Ableitung verfahrbar ist, der in Kavitäten abgestützte, wahlweise zwischen die Leitungen bringbare Filterschichten aufweist, und das aus zwei Gehäuseteilen besteht, die mit ihren Stirnflächen gegeneinander gerichtet angeordnet sind,
**dadurch gekennzeichnet,**
**daß** einer der Gehäuseteile (1, 2) fliegend gelagert ist, und daß die Gehäuseteile im Bereiche der Gehäusemitte durch Wulste (11) verstärkt sind, deren Flanken schräg nach außen abfallend bzw. konisch ausgebildet sind, und daß die Gehäuseteile (1, 2) durch gegeneinander anstellbare Spannplatten (13 bis 15) gehalten sind, welche mit Aussparungen (16) die Wulste (11), auf deren schrägen Flanken aufliegend, spannbar umgreifen.

2. Vorrichtung nach Anspruch 1,
**dadurch gekennzeichnet,**
**daß** die Flanken und/oder Endflanken der Aussparungen (16) auf den schrägen Flanken bzw. Preßflächen (12) der Wulste (11) spannbar aufliegen.

3. Vorrichtung nach Anspruch 1 oder 2,
**dadurch gekennzeichnet,**
**daß** die anstellbaren Spannplatten (13 bis 15) ein Rechteck oder Quadrat umschreiben.

4. Vorrichtung nach mindestens einem der Ansprüche 1 bis 3,
**dadurch gekennzeichnet,**
**daß** Spannplatten (13 bis 15) an ihren Enden vermittels von Gelenken miteinander verbunden sind.

5. Vorrichtung nach mindestens einem der Ansprüche 1 bis 4,
**dadurch gekennzeichnet,**
**daß** Spannplatten parallel verschiebbar vorgesehen sind.

6. Vorrichtung nach mindestens einem der Ansprüche 1 bis 4,
**dadurch gekennzeichnet,**
**daß** Spannplatten (14, 15) und/oder deren freie Enden durch Spannschrauben (19) spannbar sind.

7. Vorrichtung nach mindestens einem der Ansprüche 1 bis 6,
**dadurch gekennzeichnet,**
**daß** zwei von einer Spannschraube (19) durchgriffene Spannplatten (14,15) gegeneinander verspannbar sind, die durch Lenker (18) mit Schenkeln (17) verbunden sind.

## Claims

1. A device for filtering molten plastics, with a housing that is equipped with a feed line and a discharge line for the molten plastic, wherein a slide is arranged in said housing between the mouths of the feed line and the discharge line such that it can be displaced transverse to the feed line and the discharge line in a sealed fashion, wherein the slide contains filter layers that are supported in cavities and can be selectively moved between the lines, and wherein the housing consists of two housing parts, the end faces of which are directed toward one another, **characterized by** the fact that one of the housing parts (1, 2) is supported in a cantilevered fashion, by the fact that the housing parts are reinforced in the region of the housing center by means of beads (11), the flanks of which are realized conically or obliquely sloped outward, and by the fact that the housing parts (1, 2) are held by clamping plates (13 - 15) that can be adjusted relative to one another and encompass the beads (11) in a tensible fashion with recesses (16) that adjoin the oblique flanks of the beads.

2. The device according to Claim 1, **characterized by** the fact that the flanks and/or end flanks of the recesses (16) adjoin the oblique flanks or pressing surfaces (12) of the beads (11) in a tensible fashion.

3. The device according to Claim 1 or 2, **characterized by** the fact that the adjustable clamping plates (13 - 15) circumscribe a rectangle or a square.

4. The device according to at least one of Claims 1 - 3, **characterized by** the fact that the clamping plates (13 - 15) are connected to one another on their ends by means of joints.

5. The device according to at least one of Claims 1-4, **characterized by** the fact that the clamping plates can be displaced parallel to one another.

6. The device according to at least one of Claims 1 - 4, **characterized by** the fact that the clamping plates (14, 15) and/or their free ends are tensible by means of clamping screws (19).

7. The device according to at least one of Claims 1 - 6, **characterized by** the fact that a clamping screw (19) extends through two mutually tensible clamping plates (14, 15) that are connected to limbs (17) by means of connecting rods (18).

## Revendications

1. Dispositif pour le filtrage de coulées de matière plastique avec un bâti équipé d'une conduite d'acheminement ainsi que d'une conduite d'évacuation de la coulée de matière plastique, dans lequel, entre les embouchures de la conduite d'acheminement et de la conduite d'évacuation, un tiroir étanche peut se déplacer en travers de la conduite d'acheminement et de la conduite d'évacuation, ce tiroir présentant des couches de filtre s'appuyant dans des cavités pouvant être placées au choix entre les conduites, et qui consiste en deux parties de bâti qui sont disposées avec leurs surfaces frontales opposées l'une à l'autre,
**caractérisé en ce que**
une des parties de bâti (1, 2) est placée de manière volante et que les parties de bâti sont renforcées dans la zone du centre du bâti par des bourrelets (11) dont les flancs ont une forme diminuant vers l'extérieur ou conique et que les parties de bâti (1, 2) sont maintenues par des plaques de serrage (13 à 15) qui peuvent être placées l'une contre l'autre et qui, grâce à des évidements (16), enserrent les bourrelets (11), en reposant sur leurs flancs obliques, avec possibilité des serrage.

2. Dispositif selon la revendication 1,
**caractérisé en ce que**
les flancs et/ou extrémités de flancs des évidements (16) reposent avec possibilité de serrage sur les flancs obliques ou surfaces de presse (12) des bourrelets (11).

3. Dispositif selon la revendication 1 ou 2,
**caractérisé en ce que**
les plaques de réglage pouvant être mises en place (13 à 15) sont en forme de rectangle ou de carré.

4. Dispositif selon au moins une des revendications 1 à 3,
**caractérisé en ce que**
les plaques de serrage (13 à 15) sont reliées les unes aux autres à leurs extrémités au moyen de jointures.

5. Dispositif selon au moins une des revendications 1 à 4,
**caractérisé en ce que**
les plaques de serrage sont prévues avec une possibilité de mobilité en parallèle.

6. Dispositif selon au moins une des revendications 1 à 4,
**caractérisé en ce que**
les plaques de serrage (14, 15) et/ou leurs extrémités dégagées peuvent être serrées par des vis de serrage (19).

7. Dispositif selon au moins une des revendications 1 à 6,
**caractérisé en ce que**
deux plaques de serrage (14, 15) traversées par une vis de serrage (19) qui sont reliées par des bielles (18) à branches (17) peuvent être serrées l'une contre l'autre.
